Europäisches Patentamt

European Patent Office

Office européen des brevets

(19)

(11) Numéro de publication: **0 274 373 B1**

(12) **FASCICULE DE BREVET EUROPEEN**

(45) Date de publication de fascicule du brevet:
**11.09.91**

(21) Numéro de dépôt: **87870204.2**

(22) Date de dépôt: **28.12.87**

(51) Int. Cl.⁵: **B65G 45/00**

(54) **Dispositif de nettoyage d'une bande transporteuse.**

(30) Priorité: **31.12.86 BE 217686**

(43) Date de publication de la demande:
**13.07.88 Bulletin 88/28**

(45) Mention de la délivrance du brevet:
**11.09.91 Bulletin 91/37**

(84) Etats contractants désignés:
**DE FR NL**

(56) Documents cités:
**EP-A- 0 157 246**
**BE-A- 572 499**
**DE-A- 2 942 272**
**FR-A- 2 049 061**
**US-A- 3 841 470**

(73) Titulaire: **Zenthner, Marc**
**Schoolstraat, 13**
**B-1820 Strombeek-Bever(BE)**

(72) Inventeur: **Zenthner, Marc**
**Schoolstraat, 13**
**B-1820 Strombeek-Bever(BE)**

(74) Mandataire: **Vanderperre, Robert et al**
**Bureau Vander Haeghen S.A. Rue Colonel**
**Bourg 108 A**
**B-1040 Bruxelles(BE)**

**Description**

La présente invention est relative à un dispositif de nettoyage d'une bande transporteuse, comportant une lame principale élastiquement déformable appuyée par un bord longitudinal contre une face de la bande transporteuse, en vue de racler ladite face, et au moins une lame auxiliaire élastiquement déformable fixée à un élément de support du dispositif susdit par soudage ou rivetage le long d'un bord longitudinal, la lame auxiliare s'appuyant contre une face latérale de la lame principale, le long d'un bord longitudinal supérieur opposé au bord longitudinal inférieur, ledit bord longitudinal supérieur pouvant glisser le long de la face latérale de la lame principale, lorsque celle-ci est soumise à des chocs pendant le raclage.

Un tel dispositif de nettoyage est connu par le document DE-A-29 42 272.

Dans ce dispositif connu, les extrémités de la lame principale, ne peuvent pas s'infléchir indépendamment de la partie centrale du bord longitudinal.

Déjà, après une période de service relativement courte, le bord supérieur de la lame principale subit une usure plus importante dans sa partie centrale, puisque c'est à cet endroit que les particules à détacher sont les plus nombreuses sur la bande transporteuse.

En raison de l'usure de la partie centrale de la lame principale, la pression exercée par celle-ci devient plus importante au voisinage des bords latéraux de la lame, c'est-à-dire dans une partie où généralement peu de particules sont incrustées.

Il s'ensuit dans la partie centrale de la lame, une usure préférentielle qui s'amplifie très rapidement. Cette usure préférentielle s'explique par le fait que la principale cause de l'usure par érosion du bord supérieur de la lame principale n'est pas le contact de celle-ci avec la bande transporteuse, mais plutôt le contact avec un film de particules abrasives incrustée dans la bande transporteuse.

Ce film, une fois engendré dans la partie centrale de la bande transporteuse, grossit rapidement lorsque la partie centrale du racleur longitudinal commence à s'user.

Cet inconvénient est dû au fait que le dispositif en question ne permet pas d'appliquer de façon localisée des pressions de contact plus importantes entre la bande et la lame principale aux endroits où cette dernière doit enlever une particule fermement incrustée dans la bande.

La présente invention vise à remédier à cet inconvénient et propose un dispositif de nettoyage pour bande transporteuse, permettant un raclage localisé de la bande transporteuse.

La présente invention a pour objet un dispositif de nettoyage dans lequel le couteau racleur présente un bord longitudinal élastiquement déformable dont la surface de contact avec la face de la bande transporteuse à racler est réduite à un minimum.

L'invention a encore pour objet un dispositif de nettoyage dans lequel sont prévus des moyens pour reprendre et répartir les déformations du couteau racleur.

La présente invention est caractérisée par le fait que l'élément de support est un profilé en U, que le bord inférieur de la lame principale est fixé rigidement à une première aile du profilé en U, lui même porté par des moyens de support, et en ce que la lame auxiliaire est fixée à la deuxième aile du profilé en U, cette aile étant oblique par rapport à la première aile de manière à ce que la lame auxiliaire soit arc-boutée contre la face latérale de la lame principale.

Une lame auxiliaire prend appui sur chacune des faces latérales opposées de la lame principale.

La lame auxiliaire a, de préférence, un bord longitudinal recourbé tangent à la face latérale de la lame auxiliaire.

La lame principale et la ou les lames auxiliaires sont, de préférence, en acier à ressorts, résine armée ou matériau composite.

L'épaisseur de la lame principale est avantageusement choisie entre environ 0,5 et 1 mm et la lame auxiliaire entre à,4 et 0,8 mm si elles sont réalisées en acier. La lame principale a de préférence une épaisseur comprise entre environ 1,0 et 4 mm et la lame auxiliaire entre 0,5 et 4 mm si elles sont réalisées en matière synthétique, par exemple en résine synthétique armée.

La lame principale et la lame auxiliaire sont portées par un support commun constitué par un profilé en U, la lame principale étant fixée, par exemple par soudage, à une aile du profilé, tandis que la lame auxiliaire est fixée à l'autre aile du profilé, cette aile étant oblique inclinée d'un angle de 40° par rapport à l'autre aile. Le profilé en U susdit peut être solidaire d'un profilé de support creux pouvant par exemple avoir une section transversale carrée.

D'autres particularités et détails de l'invention ressortiront de la description détaillée suivante des dessins schématiques ci-annexés qui représentent, à titre d'exemple seulement, une forme de réalisation d'un dispositif de nettoyage de bande transporteuse suivant l'invention.

Dans ces dessins :
- la figure 1 est une vue en perspective d'un dispositif de nettoyage à double lame, cette figure ne montrant pas les moyens de support du dispositif, et
- la figure 2 est une vue en perspective montrant un des moyens de support du dispositif.

Dans ces différentes figures, les mêmes notations de référence désignent des éléments identiques.

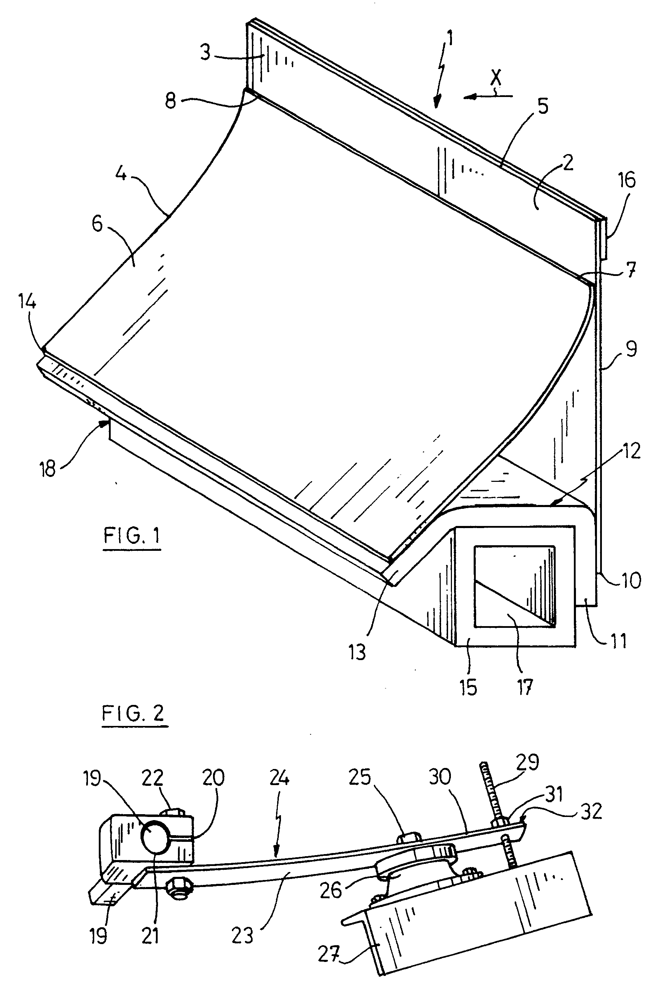

La figure 1 montre un couteau désigné dans son ensemble par la notation de référence 1, ce couteau étant constitué d'une lame principale 2 sur une face latérale 3 de laquelle prend appui une lame auxiliaire 4. La lame principale 2, et la lame auxiliaire 4, sont réalisées en acier à ressorts, en résine synthétique éventuellement armée ou en matériau composite. Elles ont une faible épaisseur, la lame principale 2 étant un peu plus épaisse que la lame auxiliaire 4. Si les deux lames sont réalisées en acier, la lame principale a une épaisseur comprise entre environ 0,5 et 1 mm, tandis que la lame auxiliaire a une épaisseur comprise entre environ 0,4 et 0,6 mm. L'épaisseur des lames peut être supérieure à ces valeurs, au cas où le matériau utilisé est autre que l'acier.

La lame principale 2 présente un bord longitudinal 5 destiné à racler une face d'une bande transporteuse non montrée.

La lame auxiliaire 4 présente une face latérale 6 convexe dirigée vers la face latérale 3 adjacente de la lame principale 2 de sorte que, comme le révèle clairement la figure 1, la face latérale 3 de la lame principale 2 est tangente en 7 à la face latérale 6 de la lame auxiliaire 4, cette dernière étant en contact, par un bord biseauté longitudinal 8, avec la face latérale 3 de la lame principale 2, à l'endroit 7, cette dernière est tangente à la lame auxiliaire 4.

Le bord longitudinal 8 de la lame auxiliaire 4 peut glisser sur la face latérale 3 de la lame principale 2, lorsque cette dernière est sollicitée dans le sens de la flèche X. Ce glissement détermine les déformations que peut subir le bord longitudinal 5 de la lame principale 2 au contact de la face de la bande transporteuse et débarrassant la face latérale 3 des matériaux qui peuvent s'y être déposés au cours du raclage.

Il est évident qu'au lieu d'une seule lame auxiliaire 4, le dispositif suivant l'invention peut comporter deux lames auxiliaires 4, l'une prenant appui sur la face latérale 3 et l'autre sur la face opposée 9 de la lame principale 2.

L'emploi de deux lames auxiliaires 4 au lieu d'une seule est avantageux à plusieurs égards. Il permet d'utiliser le dispositif de nettoyage quel que soit le sens du déplacement de la bande transporteuse. Il permet aussi de détacher les matériaux déposés sur les deux faces latérales 3,9 de la lame principale 2 grâce au glissement du bord longitudinal 8 des lames auxiliaires 4 par rapport au bord longitudinal 5 de la lame principale 2.

Le long de son bord longitudinal 10 opposé à son bord longitudinal 5 faisant office de racleur, la lame principale est fixée, par exemple par soudage par points ou par rivetage, à une aile d'un profilé en U métallique désignée dans son ensemble par la notation de référence 11.

Le profilé en U 12 comporte une autre aile 13 inclinée le long de son bord longitudinal 14 opposé à son bord longitudinal 8, la lame auxiliaire 4 est fixée, par exemple par soudage par points ou par rivetage, au prolongement incliné de l'aile 13 du profilé 11.

Ainsi, la lame auxiliaire 4 s'arc-boute sur la lame principale 2.

Les ailes 11,13 du profilé en U 12 sont fixées à un profilé creux 15 de section carrée constituant un profilé de support du dispositif suivant l'invention.

La lame principale 2 porte, au voisinage de son bord longitudinal 8, une couche ou revêtement 16 résistant à l'abrasion.

Cette couche ou revêtement dur 16, qui peut éventuellement contenir des grains abrasifs, est ménagée par brasage, soudage, sertissage, projection au pistolet à plasma, enrobage ou collage sur la face latérale 9 de la lame principale 2.

Le dispositif représenté à la figure 1 est muni de moyens permettant de régler la pression exercée par le bord longitudinal racleur 8 de la lame principale 2 sur la face de la bande transporteuse à nettoyer.

Une forme de réalisation de ces moyens est illustrée à la figure 2.

Dans chacune des extrémités ouvertes 17,18 du profilé 15 est engagée une extrémité carrée 19 d'une broche dont l'autre extrémité circulaire 20 est serrée entre des mors 21 pourvus d'une vis ou d'un boulon de serrage 22 qui assure également la fixation des mors 21 à une extrémité d'un bras 23 d'un levier cintré en acier à ressort désigné dans son ensemble par la notation de référence 24.

Ce levier 24 prend appui en 25 sur un bloc élastique 26 porté par une pièce fixe 27. Cette pièce 27 porte également une tige filetée 29 traversant un trou ménagé dans l'autre bras 30 du levier 24. Un écrou 31 est vissé sur la tige filetée 29 et prend appui sur la face supérieure 32 du bras 30 dudit levier 24.

En faisant tourner l'écrou 31 sur la tige filetée 29, on peut régler à volonté l'inclinaison du levier et ainsi la pression appliquée par le bord longitudinal 8 de la lame principale 2 sur la face à racler de la bande transporteuse.

Le bloc élastique 26 absorbe les chocs auxquels la lame principale 2 est soumise pendant le raclage. Ainsi, la composante verticale des chocs est amortie par compression des blocs élastiques et dans une moindre mesure par la déformation élastique du bras de levier 23, tandis que la composante transversale des chocs est re prise par un déplacement latéral de la lame, grâce à un mouvement de pivotement des bras de levier 23, autour des points d'appui 25, dans la mesure tolérée par l'inclinaison des tiges filetées 29. Ces écarts transversaux de la lame principale 2 permettent d'éviter les prises de contact ponctuelles et répétées du bord latéral 5 contre certaines aspérités de la bande transporteuse, dues par exemple à des matières dures très adhérentes.

La lame principale du dispositif selon l'invention peut, comme indiqué plus haut, être munie au voisinage du bord longitudinal destiné à racler la bande, d'une couche ou revêtement résistant à l'abrasion, cette couche ou revêtement pouvant contenir des matières très dures telles que particules de carbure de tungstène et plaquettes d'abrasifs polycristallins.

En cas de recouvrement de la lame principale par plaquettes dures, il faut utiliser des plaquettes de dimensions très réduites, de façon à ne diminuer en rien l'élasticité de la lame principale. De cette manière, nous obtenons une lame longitudinale à revêtement très dur mais néanmoins élastiquement déformable.

Ce type de couche abrasive peut avantageusement être utilisé, à cause de la flexibilité de la couche contenant les matières abrasives. Cette moindre flexibilité permet également de limiter la dégradation de la face à racler de la bande transporteuse, d'accroître le rendement énergétique du dispositif ou de diminuer les pertes d'énergie par échauffement de la lame principale.

De plus, la couche ou le revêtement résistant à l'abrasion peut avoir une épaisseur variable selon les matériaux abrasifs utilisés et les matières à enlever de la bande transporteuse.

Enfin, cette couche ou revêtement résistant à l'abrasion, permet d'accroître le temps d'utilisation du dispositif suivant l'invention. En effet, la lame principale s'use d'autant plus vite lorsque de la matière défile sous pression entre celle-ci et la bande transporteuse, mais cette usure est minimisée dans le dispositif suivant l'invention grâce à l'existence d'une couche ou revêtement résistant à l'abrasion sur la lame principale et à la flexibilité de cette dernière.

Grâce à la flexibilité de la lame principale, le dispositif de nettoyage de bandes transporteuses selon l'invention peut être utilisé avec des courroies transporteuses agrafées, car la lame peut s'infléchir lors de l'impact de celle-ci avec une agrafe de la bande.

De plus, grâce à cette flexibilité, les extrémités de la lame principale peuvent facilement s'infléchir, indépendamment de la partie centrale, de sorte que la partie centrale du bord longitudinal de cette lame principale reste en contact avec la face de la bande transporteuse à nettoyer, même lorsque cette lame a subi une certaine usure. Cet infléchissement facile des extrémités de la lame principale permet également l'application d'une pression plus importante sur la partie centrale de la bande transporteuse par rapport à celle appliquée sur les bords de cette bande transporteuse et permet donc d'éviter un déchirement des bords de la bande transporteuse.

Le dispositif de nettoyage suivant l'invention, grâce aux moyens destinés à reprendre et répartir les déformations du couteau racleur dont il est pourvu, est encore efficace pour le nettoyage de bandes transporteuses détériorées ou trouées. Il a d'ailleurs l'avantage, lorsqu'il est utilisé pour le nettoyage de telles bandes transporteuses, de ne pas agrandir davantage les trous existants.

Le dispositif de nettoyage suivant l'invention ne nécessite plus, comme cela était le cas pour les dispositifs de nettoyage antérieurs, l'application des forces importantes sur le couteau, vu la faible surface de contact entre celui-ci et la bande transporteuse.

Le dispositif suivant l'invention permet encore, grâce à la flexibilité de ses lames, d'appliquer de façon localisée, des pressions de contact plus importantes entre la bande et le couteau aux endroits où ce dernier doit enlever une particule fermement incrustée dans la bande.

Les moyens de réglage de la pression exercée par le bord longitudinal (5) de la lame principale (2), ne doivent pas être dimensionnés en fonction de la largeur de la courroie. Ils sont universellement utilisables quelle que soit la longueur du couteau racleur.

## Revendications

1. Dispositif de nettoyage d'une bande transporteuse, comportant une lame principale (2) élastiquement déformable appuyée par un bord longitudinal (5) contre une face de la bande transporteuse en vue de racler ladite face, et au moins une lame auxiliaire (4) élastiquement déformable, fixée à un élément de support (12) du dispositif susdit par soudage ou rivetage le long d'un bord longitudinal inférieur (14), la lame auxiliaire (4) s'appuyant contre une face latérale (3) de la lame principale (2) le long d'un bord longitudinal supérieur (7) opposé au bord longitudinal inférieur (14), ledit bord longitudinal supérieur (7) pouvant glisser le long de la face (3) latérale de la lame principale (2), lorsque celle-ci est soumise à des chocs pendant le raclage, caractérisé en ce que l'élément de support (12) est un profilé en U en ce que le bord inférieur de la lame principale (2) est fixé rigidement à une première aile (11) du profilé en U, lui même (12) porté par des moyens de support (15), et en ce que la lame auxiliaire (4) est fixée à la deuxième aile du profilé en U, cette aile (13) étant oblique par rapport à la première aile (11) de manière à ce que la lame auxiliaire (4) soit arc-boutée contre la face latérale de la lame principale (2).

2. Dispositif de nettoyage suivant la revendication 1, caractérisé en ce qu'une deuxième lame auxiliaire (4) prend appui sur l'autre face latérale (3) de la lame principale (2).

3. Dispositif de nettoyage suivant la revendication 1 ou 2, caractérisé en ce que chaque lame auxiliaire (4) présente une face latérale convexe (6) dirigée vers ladite face latérale (3) de la lame principale (2).

4. Dispositif suivant l'une quelconque des revendications précédentes, caractérisé en ce que chaque lame auxiliaire (4) présente un rebord (7) recourbé tangent à la face latérale (6) de la lame principale (2).

5. Dispositif suivant l'une quelconque des revendications précédentes, caractérisé en ce que chaque lame auxiliaire (4) est en contact par un bord longitudinal biseauté (8) avec ladite face latérale (3) de la lame principale (2).

6. Dispositif suivant l'une quelconque des revendications précédentes, caractérisé en ce que la lame principale (2) est en acier à ressorts et chaque lame auxiliaire (4), en matière synthétique.

7. Dispositif suivant la revendication 7, caractérisé en ce que la lame principale (2) a une épaisseur comprise entre environ 0,5 et 1 mm.

8. Dispositif suivant l'une quelconque des revendications précédentes, caractérisé en ce que la lame principale (2) est munie d'une couche ou d'un revêtement résistant à l'abrasion (16) au voisinage de son bord longitudinal (5) destiné à racler une face de la bande transporteuse.

## Claims

1. Device for cleaning a conveyor belt, incorporating an elastically deformable main blade (2) pressed by means of a longitudinal edge (5) against one face of the conveyor belt for the purpose of scraping the said face, and at least one elastically deformable auxiliary blade (4), fixed to a member (12) supporting the above mentioned device by welding or riveting along a bottom longitudinal edge (14), the auxiliary blade (4) being pressed against a lateral face (3) of the main blade (2) along a top longitudinal edge (7) opposite to the bottom longitudinal edge (14), the said top longitudinal edge (7) being able to slide along the lateral face (3) of the main blade (2), when the latter is subjected to shocks during scraping, characterised in that the support member (12) is a U-shaped section, in that the bottom edge of the main blade (2) is fixed rigidly to a first flange (11) of the U-shaped section, itself carried by support means (15), and in that the auxiliary blade (4) is fixed to the second flange of the U-shaped section, this flange (13) being slanting with respect to the first flange (11) so that the auxiliary blade (4) is buttressed against the lateral face of the main blade (2).

2. Cleaning device according to claim 1, characterised in that a second auxiliary blade (4) bears against the other lateral face (3) of the main blade (2).

3. Cleaning device according to claim 1 or 2, characterised in that each auxiliary blade (4) has a convex lateral face (6) directed towards the said lateral face (3) of the main blade (2).

4. Device according to any one of the preceding claims, characterised in that each auxiliary blade (4) has a curved edge (7) tangent to the lateral face (6) of the main blade (2).

5. Device according to any one of the preceding claims, characterised in that each auxiliary blade (4) is in contact, through a bevelled longitudinal edge (8), with the said lateral face (3) of the main blade (2).

6. Device according to any one of the preceding claims, characterised in that the main blade (2) is made from spring steel and each auxiliary blade (4) from synthetic material.

7. Device according to claim 7, characterised in that the main blade (2) has a thickness of between approximately 0.5 and 1 mm.

8. Device according to any one of the preceding claims, characterised in that the main blade (2) is provided with an abrasion resistant layer or coating (16) in the vicinity of its longitudinal edge (5) designed to scrape one face of the conveyor belt.

## Patentansprüche

1. Vorrichtung zum Reinigen eines Transportbandes, mit einem elastisch verformbaren Hauptblatt (2), das mit einer Längskante (5) gegen eine Seite des Transportbandes anliegt, um diese Seite abzuschaben, und wenigstens einem elastisch verformbaren Hilfsblatt (4), das an einem Stützelement (12) der Vorrichtung durch Schweißen oder Nieten entlang einer unteren Längskante (14) befestigt ist, wobei sich das Hilfsblatt (4) an einer Seitenfläche (3) des Hauptblattes (2) entlang einer der unteren Längskante (14) gegenüberliegenden oberen Längskante (7) abstützt, wobei die obere Längskante (7) entlang der Seitenfläche (3) des Hauptblattes (2) gleiten kann, wenn diese während des Abschabens Stößen ausgesetzt ist, dadurch gekennzeichnet, daß das Stützelement (12) ein U-Profil ist, daß die untere Kante des Hauptblattes (2) starr an einem ersten Schenkel (11) des U-Profils (12) befestigt ist, welches seinerseits von Stützeinrichtungen (15) getragen ist, und daß das Hilfsblatt (4) am zweiten Schenkel des U-Profils befestigt ist, wobei dieser Schenkel (13) bezüglich des ersten Schenkels (11) derart geneigt ist, daß sich das Hilfsblatt (4) an der Seitenfläche des Hauptblattes (2) bogenförmig abstützt.

2. Vorrichtung zum Reinigen nach Anspruch 1, dadurch gekennzeichnet, daß sich ein zweites Hilfsblatt (4) an der anderen Seitenfläche (3) des Hauptblattes (2) abstützt.

3. Vorrichtung zum Reinigen nach Anspruch 1 oder 2, dadurch gekennzeichnet, daß jedes Hilfsblatt (4) eine zur Seitenfläche (3) des Hauptblattes (4) gerichtete konvexe Seitenfläche (6) aufweist.

4. Vorrichtung nach einem der vorhergehenden Ansprüche, dadurch gekennzeichnet, daß jedes Hilfsblatt (4) einen gebogenen Rand (7) aufweist, der die Seitenfläche (3) des Hauptblattes (2) tangiert.

5. Vorrichtung nach einem der vorhergehenden Ansprüche, dadurch gekennzeichnet, daß jedes Hilfsblatt (4) über eine abgeschrägte Längskante (8) mit der Seitenfläche (3) des Hauptblattes (2) in Berührung ist.

6. Vorrichtung nach einem der vorhergehenden Ansprüche, dadurch gekennzeichnet, daß das Hauptblatt (2) aus Federstahl und jedes Hilfsblatt (4) aus synthetischem Material besteht.

7. Vorrichtung nach Anspruch 7, dadurch gekennzeichnet, daß die Dicke des Hauptblattes ungefähr zwischen 0,5 und 1 mm beträgt.

8. Vorrichtung nach einem der vorhergehenden Ansprüche, dadurch gekennzeichnet, daß das Hauptblatt (2) in der Nähe seiner zum Abschaben einer Seite eines Transportbandes bestimmten Längskante (5) mit einer abriebfesten Schicht oder Verkleidung (16) versehen ist.

FIG. 1

FIG. 2